# EUROPEAN PATENT SPECIFICATION

(11) **EP 3 473 844 B1**
(45) Date of publication and mention of the grant of the patent: **08.12.2021**
(21) Application number: 18200174.3
(22) Date of filing: 12.10.2018
(51) Int. Cl.: F02M 59/02, F02M 59/46, F02M 61/20, F02M 59/44, F02M 63/00, F02M 61/16, F02M 59/10, F02M 37/00, F02M 59/36, F16K 47/16, F04B 1/04, F04B 53/14, F04B 19/22, F04B 53/10, F04B 53/16, F04B 53/06

(54) **FUEL PUMP**
KRAFTSTOFFPUMPE
POMPE À CARBURANT

(30) Priority: 17.10.2017 GB 201717028
(43) Date of publication of application: 24.04.2019
(73) Proprietor: Delphi Technologies IP Limited, Saint Michael (BB)
(72) Inventor: MACLANE, Stephen J., Gillingham, Kent ME8 0RU (GB); JONES, David, LONDON, SE9 5RY (GB)
(74) Representative: Allain, Michel Jean Camille

(56) References cited:
- EP-A1- 2 557 307
- WO-A1-2016/102138
- WO-A1-2016/131644
- DE-A1-102008 018 018
- DE-A1-102012 210 018
- DE-A1-102015 218 387

## Description

### TECHNICAL FIELD

The present invention relates to an inlet valve arrangement of a fuel pump.

### BACKGROUND OF THE INVENTION

A fuel pump of a fuelling equipment of an internal combustion engine has a body wherein in use, a piston guided in a main bore is reciprocally varying the volume of a compression chamber, fuel entering in said chamber via an inlet controlled by an inlet valve that urged toward a closed position of said inlet by a spring compressed between a disc-like seat member fixed to said valve and a lower seat defined on the pump body.

The high frequency reciprocal moves of the valve generate undesirable bouncing and overshooting of the valve head re-opening the inlet and altering the fuel equipment efficiency. Furthermore, the impacts of the valve closing the inlet hammer and damage the faces of the seat and of the valve. WO 2016/131644 A1 and EP 2 557 307 A1 refer to inlet valve arrangements of a fuel pump.

### SUMMARY OF THE INVENTION

Accordingly, it is an object of the present invention to resolve the above mentioned problems in providing an inlet valve arrangement of a fuel pump of a fuelling equipment of an internal combustion engine according to claim 1.

In another aspect of the invention, an annular opening is defined between said skirt distant extremity and said annular face of the pump body surrounding the lower seat, said annular opening defining a fluid communication between the spring chamber and the inlet chamber.

In another aspect of the invention, the opening of said fluid communication varies in use, and it defines a throttle damping the displacements of the valve member.

In another aspect of the invention, said skirt distant annular extremity defines a female conical face and wherein said annular face of the pump body surrounding the lower seat defines a complementary male conical face.

In another aspect of the invention the protection extends to a fuel pump of a fuelling equipment of an internal combustion engine, the pump having a body wherein in use, a piston guided in a main bore is reciprocally varying the volume of a compression chamber, fuel entering in said chamber via an inlet opening controlled by said inlet valve arrangement as previously described.

### BRIEF DESCRIPTION OF THE DRAWINGS

The present invention is now described by way of example with reference to the accompanying drawings in which:
Figure 1 is an axial section of a fuel pump inlet valve arrangement as per the invention, said arrangement being in a closed position.
Figure 2 is a detail of figure 1.
Figure 3 is similar to figure 1 the arrangement being in an open position.
Figure 4 is a detail of figure 3.

### DESCRIPTION OF THE PREFERRED EMBODIMENTS

The figures partially present a high pressure (HP) pump 10 shown section along a main axis X, said pump 10 comprising a body 12 wherein a piston guided in a blind bore partially defines, along with the closed end of said bore, a compression chamber 14. In use, the pump 10 is arranged in a fuelling equipment of an internal combustion engine and fuel at low pressure (LP) enters said compression chamber 14 wherein it is pressurised prior to be delivered via an outlet to fuel injectors.

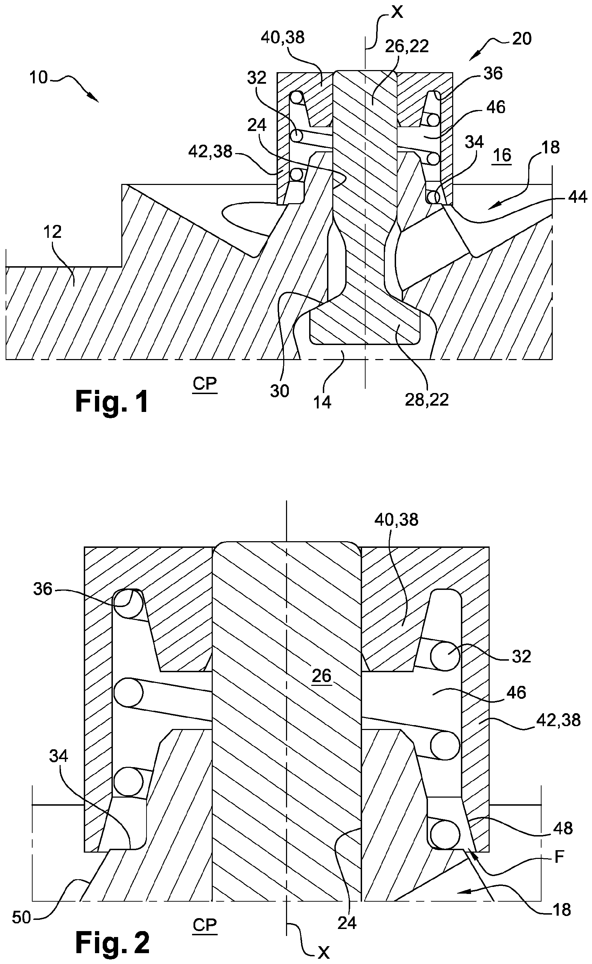

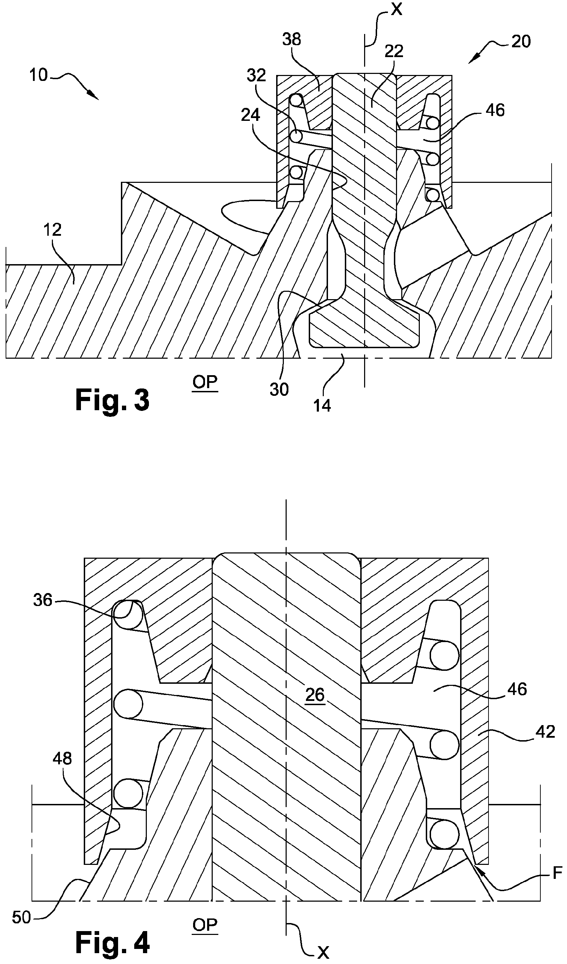

As LP fuel enters the pump 10, it fills an inlet chamber 16 wherefrom via an inlet conduit 18 it flows in said compression chamber 14. An inlet valve arrangement 20 controls the entry in the compression chamber 14, said arrangement 20 comprising an inlet valve member 22 guided in a valve bore 24 of the pump body 12. In the example shown, said valve bore 24 is coaxial to the main bore and it extends from an inner end opening in the compression chamber 14 to an opposed outer end opening in the inlet chamber 16. The inlet valve member 22 is a poppet valve having a stem 26 and a head 28, the stem 26 being guided in the valve bore 24, the head 28 being in the compression chamber wherein it cooperates with the valve body to alternatively close (figures 1 and 2) or open (figures 3 and 4) an inlet valve seat 30 enabling or preventing fuel entry in the compression chamber 14 . Said valve member 22 is upwardly (following the arbitrary orientation of the figures) urged toward a closed position CP of said valve seat 30 by a spring 32 arranged in the inlet chamber 16 and compressed between a lower spring seat 34 defined on the pump body surrounding said valve bore outer end and, an upper spring seat 36 defined on a spring seat member 38 fixed to the end of the stem 26 opposed to the head 28.

The spring seat member 38 has a cup-like shape comprising a disc base 40 and an outer skirt 42, the base 40 radially extending from a central hole fixedly crimped on the stem 26 and, the skirt 42 axially X downwardly extending from the peripheral edge of the disc base toward a distant annular end 44 that is in the vicinity to the lower spring seat 34. As shown on the figures the spring seat member 38 defines a spring chamber 46 in which the spring 32 is enclosed, an annular fluid communication F creating a damper and being defined between a female conical face 48 provided on the skirt annular end 44 and a complementary male conical face 50 surrounding the lower spring seat 34 and defined on the pump body 12.

Alternatively to the conical faces 48, 50 represented, the fluid communication F could be defined between annular flat faces or, faces having any other complementary profiles.

Two operational steps of the pump 10 are now detailed.

In a first step, the piston upwardly moves from BDC to TDC and it compresses the fuel retained in the compression chamber 14. The inlet valve member 22 is upwardly urged to the closed position CP of the valve seat 30 by the combined forces to the spring 32 and of the rising pressure in the compression chamber 14. The fluid communication F opens as shown in figures 1 and 2 and, LP fuel fills the spring chamber 46.

In a second step, after the pressurised fuel has been expelled out of the compression chamber 14, the piston downwardly returns from TDC to BDC and the pressure drops in the chamber 14 attracting the valve member 22 with sufficient force to move to an open position OP of the valve seat 30. As the valve member 22 downwardly moves, the female conical face 48 of the skirt approaches the male conical face 50 of the body and the fluid communication F narrows restricting the path for the fuel out of the spring chamber 46 thus damping the opening movement of the valve member 22.

### LIST OF REFERENCES

- X: axis
- BDC: bottom dead center
- TDC: top dead center
- F: fluid communication
- OP: open position
- CP: closed position

- 10: pump
- 12: body
- 14: compression chamber
- 16: inlet chamber
- 18: inlet conduit
- 20: inlet valve arrangement
- 22: inlet valve member
- 24: valve bore
- 26: stem
- 28: head
- 30: inlet valve seat
- 32: spring
- 34: lower spring seat
- 36: upper spring seat
- 38: spring seat member
- 40: disc base
- 42: skirt
- 44: skirt annular end
- 46: spring chamber
- 48: female conical face
- 50: male conical face

## Claims

1. Inlet valve arrangement (20) of a fuel pump (10) of a fuelling equipment of an internal combustion engine, the pump (10) having a body (12) wherein in use, a piston is reciprocally varying the volume of a compression chamber (14), fuel entering in said chamber via an inlet opening controlled by said inlet valve arrangement (20) comprising a valve member (22) having a stem (26) and a head (28), the stem (26) being guided along a valve axis (X) in a valve bore (24) provided in the pump body (12), the head (28) being adapted to close an inlet valve seat (30) controlling fuel entry in the control chamber and, the stem (26) extending to an opposed outer end protruding in an inlet chamber (16) wherein a spring (32) compressed between a lower seat (34) defined on the pump body and surrounding said valve bore and, an upper spring seat (36) defined on a seat member (38) fixed to said stem outer end, the spring (32) urging the valve member (22) toward a closed position (CP) of the inlet opening and wherein, said spring seat member (38) has a disc-like base (40) fixed to the stem (26) and defining said upper spring seat (36) and,
**characterized in that** the spring seat member (38) further has a skirt member (42) defining a spring chamber (46) wherein said spring is arranged, said skirt member (32) axially extending from the periphery of said disc base to a distant annular end (44) cooperating with an annular face (50) of the pump body surrounding the lower seat (34).

2. Inlet valve arrangement (20) as claimed in the preceding claim wherein an annular opening is defined between said skirt (44) distant extremity and said annular face of the pump body surrounding the lower seat (34), said annular opening defining a fluid communication (F) between the spring chamber (46) and the inlet chamber (16).

3. Inlet valve arrangement (20) as claimed in claim 2 wherein the opening of said fluid communication (F) varies in use, and it defines a throttle damping the displacements of the valve member (22).

4. Inlet valve arrangement (20) as claimed in any of the preceding claims wherein said skirt distant annular extremity (44) defines a female conical face (48) and wherein said annular face of the pump body surrounding the lower seat defines a complementary male conical face (50).

5. Fuel pump (10) of a fuelling equipment of an internal combustion engine, the pump having a body wherein in use, a piston guided in a main bore is reciprocally varying the volume of a compression chamber (14), fuel entering in said chamber via an inlet opening controlled by said inlet valve arrangement (20) as claimed as in any of the preceding claims.

## Patentansprüche

1. Einlassventilanordnung (20) einer Kraftstoffpumpe (10) einer Kraftstoffversorgungseinrichtung eines Verbrennungsmotors, wobei die Pumpe (10) einen Körper (12) hat, in dem in Betrieb ein Kolben das Volumen einer Kompressionskammer (14) reziprok variiert, wobei Kraftstoff in die Kammer über eine Einlassöffnung eintritt, die durch die Einlassventilanordnung (20) gesteuert wird, die ein Ventilelement (22) mit einem Schaft (26) und einem Kopf (28) aufweist, wobei der Schaft (26) entlang einer Ventilachse (X) in einer in dem Pumpenkörper (12) vorgesehenen Ventilbohrung (24) geführt wird, wobei der Kopf (28) ausgebildet ist, einen Einlassventilsitz (30) zu schließen, der den Kraftstoffeintritt in die Steuerkammer steuert, und sich der Schaft (26) zu einem gegenüberliegenden äußeren Ende erstreckt, das in eine Einlasskammer (16) vorsteht, wobei eine Feder (32) zwischen einem unteren Sitz (34), der an dem Pumpenkörper definiert ist und die Ventilbohrung umgibt, und einem oberen Federsitz (36) komprimiert ist, der an einem Sitzelement (38) definiert ist, das an dem äußeren Schaftende befestigt ist, wobei die Feder (32) das Ventilelement (22) in Richtung einer geschlossenen Position (CP) der Einlassöffnung drückt und wobei das Federsitzelement (38) eine scheibenartige Basis (40) hat, die an dem Schaft (26) befestigt ist und den oberen Federsitz (36) definiert, und
**dadurch gekennzeichnet, dass** das Federsitzelement (38) weiter ein Blendenelement (42) hat, das eine Federkammer (46) definiert, in der die Feder angeordnet ist, wobei sich das Blendenelement (32) axial von dem Umfang der Scheibenbasis zu einem entfernten ringförmigen Ende (44) erstreckt, das mit einer ringförmigen Fläche (50) des Pumpenkörpers zusammenwirkt, die den unteren Sitz (34) umgibt.

2. Einlassventilanordnung (20) gemäß dem vorhergehenden Anspruch, wobei eine ringförmige Öffnung zwischen dem entfernten Ende der Schürze (44) und der ringförmigen Fläche des Pumpenkörpers, die den unteren Sitz (34) umgibt, definiert ist, wobei die ringförmige Öffnung eine Fluidverbindung (F) zwischen der Federkammer (46) und der Einlasskammer (16) definiert.

3. Einlassventilanordnung (20) gemäß Anspruch 2, wobei die Öffnung der Fluidverbindung (F) in Betrieb variiert und eine Drossel definiert, die die Verschiebungen des Ventilelements (22) dämpft.

4. Einlassventilanordnung (20) gemäß einem der vorhergehenden Ansprüche, wobei das entfernte ringförmige Ende (44) der Schürze eine weibliche konische Fläche (48) definiert und wobei die ringförmige Fläche des Pumpenkörpers, die den unteren Sitz umgibt, eine komplementäre männliche konische Fläche (50) definiert.

5. Kraftstoffpumpe (10) einer Kraftstoffversorgungseinrichtung eines Verbrennungsmotors, wobei die Pumpe einen Körper hat, in dem in Betrieb ein in einer Hauptbohrung geführter Kolben das Volumen einer Kompressionskammer (14) reziprok variiert, wobei Kraftstoff in die Kammer über eine Einlassöffnung eintritt, die durch die Einlassventilanordnung (20) gemäß einem der vorhergehenden Ansprüche gesteuert wird.

## Revendications

1. Système de clapet d'aspiration (20) d'une pompe à carburant (10) d'un équipement d'alimentation en carburant d'un moteur à combustion interne, la pompe (10) comportant un corps (12) où, lors de l'utilisation, un piston fait varier, par un mouvement alternatif, le volume d'une chambre de compression (14), du carburant entrant dans ladite chambre par une ouverture d'aspiration régulée par ledit système de clapet d'aspiration (20) comprenant un obturateur (22) comportant une tige (26) et une tête (28), la tige (26) étant guidée le long d'un axe de clapet (X) dans un orifice de clapet (24) formé dans le corps de pompe (12), la tête (28) étant apte à fermer un siège de clapet d'aspiration (30) régulant l'entrée de carburant dans la chambre de commande et, la tige (26) s'étendant jusqu'à une extrémité extérieure opposée faisant saillie dans une chambre d'aspiration (16) où un ressort (32) est comprimé entre un siège inférieur (34), défini sur le corps de pompe et entourant ledit orifice de clapet, et un siège de ressort supérieur (36) défini sur un élément formant siège (38) fixé à ladite extrémité extérieure de la tige, le ressort (32) sollicitant l'obturateur (22) vers une position fermée (CP) de l'ouverture d'aspiration et ledit élément formant siège de ressort (38) présentant une base (40) semblable à un disque fixée à la tige (26) et définissant ledit siège de ressort supérieur (36) et,
**caractérisé en ce que** l'élément formant siège de ressort (38) comporte en outre un élément formant jupe (42) définissant une chambre de ressort (46) où ledit ressort est disposé, ledit élément formant jupe (32) s'étendant axialement de la périphérie de ladite base en forme de disque à une extrémité annulaire distante (44) coopérant avec une face annulaire (50) du corps de pompe entourant le siège inférieur (34).

2. Système de clapet d'aspiration (20) selon la revendication précédente, dans lequel une ouverture annulaire est définie entre ladite extrémité distante (44) de la jupe et ladite face annulaire du corps de pompe entourant le siège inférieur (34), ladite ouverture annulaire définissant une communication fluidique (F) entre la chambre de ressort (46) et la chambre d'aspiration (16).

3. Système de clapet d'aspiration (20) selon la revendication 2, dans lequel l'ouverture de ladite communication fluidique (F) varie lors de l'utilisation, et elle définit un étranglement amortissant les déplacements de l'obturateur (22).

4. Système de clapet d'aspiration (20) selon l'une quelconque des revendications précédentes, dans lequel ladite extrémité annulaire distante (44) de la jupe définit une face conique femelle (48) et dans lequel ladite face annulaire du corps de pompe entourant le siège inférieur définit une face conique mâle complémentaire (50).

5. Pompe à carburant (10) d'un équipement d'alimentation en carburant d'un moteur à combustion interne, la pompe comportant un corps où, lors de l'utilisation, un piston guidé dans un orifice principal fait varier, par un mouvement alternatif, le volume d'une chambre de compression (14), du carburant entrant dans ladite chambre par une ouverture d'aspiration régulée par ledit système de clapet d'aspiration (20) selon l'une quelconque des revendications précédentes.
